# EUROPEAN PATENT SPECIFICATION

(11) **EP 3 056 825 B1**
(45) Date of publication and mention of the grant of the patent: **27.03.2019**
(21) Application number: 16150591.2
(22) Date of filing: 08.01.2016
(51) Int. Cl.: G01C 9/00, F24D 19/10

(54) **A THERMOSTATIC CONTROL DEVICE WITH AN ORIENTATION SENSOR**
THERMOSTATREGELUNGSVORRICHTUNG MIT EINEM AUSRICHTUNGSSENSOR
DISPOSITIF DE RÉGULATION THERMOSTATIQUE AVEC UN CAPTEUR D'ORIENTATION

(30) Priority: 11.02.2015 DK 201500078
(43) Date of publication of application: 17.08.2016
(73) Proprietor: Danfoss A/S, 6430 Nordborg (DK)
(72) Inventor: CLAUSEN, Anders Østergaard, 8680 Ry (DK); NIELSEN, Peter Gammeljord, 7100 Vejle (DK); HESSELDAHL, Søren, 7182 Bredsten (DK); LAURITSEN, Klaus, 7120 Vejle (DK)

(56) References cited:
- DE-A1-102004 012 620
- DE-A1-102013 113 527
- DE-U1-202010 007 399

## Description

### FIELD OF THE INVENTION

The present invention relates to a thermostatic control device for regulating a flow of fluid, such as a flow of heating fluid, in a conduit, e.g. a thermostatic control device for a radiator valve. The thermostatic control device of the invention comprises an orientation sensor arranged to detect an orientation of the thermostatic control device.

### BACKGROUND OF THE INVENTION

Thermostatic control devices are often used for controlling a flow of fluid, such as a flow of heating fluid in a radiator, in such a manner that a specific temperature is maintained in the room in which the radiator is positioned. To this end the thermostatic control device controls the flow of fluid on the basis of a measurement of a temperature prevailing in the room. The temperature sensor used for this purpose is often arranged inside a housing of the thermostatic control device.

When a thermostatic control device is mounted on a radiator, it can be orientated in a number of different ways, e.g. depending on where the radiator is located relative to windows, doors, walls, etc. How the thermostatic control device is oriented has an impact on how the temperature sensor is oriented with respect to the room. Furthermore, in the case that the thermostatic control device is provided with a display, it may have an impact on how the display is oriented with respect to a person having to read the display. DE20102007399U describes a thermostat for heater valve. The thermostat contains an electronic circuit that is adjustable and programmable such that the readability of the display takes place from the common viewing direction independent of the installation of the thermostat.

WO 2009/024746 A2 discloses a thermostatic control device for regulating the flow of heating fluid in a conduit. The thermostatic control device comprises actuation means operable to alter the flow of heating fluid in the conduit, processing means for controlling the actuation means, a first temperature sensor for sensing the ambient temperature on the vicinity of the device, and a second temperature sensor for sensing the temperature of the conduit. The processing means is operable to receive temperature inputs from the first and second temperature sensors and produce an output based on the temperature inputs for controlling the actuation means. The processing means may be operable to calculate a correction to the temperature input measured by the first sensor using the temperature input measured by the second sensor.

### DESCRIPTION OF THE INVENTION

It is an object of embodiments of the invention to provide a thermostatic control device which can be operated in an optimal manner, regardless of the orientation of the thermostatic control device.

The invention provides a thermostatic control device for regulating a flow of fluid in a conduit, the thermostatic control device comprising:
- a housing,
- at least one temperature sensor positioned inside the housing, and being arranged to measure an ambient temperature in the vicinity of the thermostatic control device,
- an orientation sensor positioned inside the housing, said orientation sensor being arranged to detect an orientation of the thermostatic control device and to generate a sensor output signal reflecting a detected orientation of the thermostatic control device, and
- control means arranged to receive a sensor output signal from the orientation sensor, and to generate one or more command signals based thereon, the control means being arranged to generate a command signal for the temperature sensor(s) (3, 4), in order to cause the temperature sensor(s) (3, 4) to perform temperature measurements along a predefined direction.

The present invention relates to a thermostatic control device for regulating a flow of fluid in a conduit. The fluid could, e.g., be a heating fluid, in which case the conduit may form part of a heating system, e.g. including a radiator. As an alternative, the fluid could be a cooling fluid, in which case the conduit may form part of a cooling system.

The thermostatic control device comprises a housing. In the present context the term 'housing' should be interpreted to mean a substantially closed structure, which defines an interior part, and forms an outer boundary of the thermostatic control device.

The thermostatic control device further comprises at least one temperature sensor positioned inside the housing, i.e. in the interior part defined by the housing. The temperature sensor(s) may, e.g., be in the form of electrical temperature sensors, but other kinds of temperature sensors could also be applied.

The temperature sensor(s) is/are arranged to measure an ambient temperature in the vicinity of the thermostatic control device. In the present context the term 'ambient temperature' should be interpreted to mean a temperature which is prevailing in a region near the thermostatic control device, such as in a room in which the thermostatic control device is located. The measured ambient temperature may, thus, be a temperature which it is desirable to keep at a specific level, as described above, and accordingly the measurements performed by the temperature sensor(s) may be used during control of the thermostatic control device.

An orientation sensor is positioned inside the housing. The orientation sensor is arranged to detect an orientation of the thermostatic control device, and to generate a sensor output signal reflecting a detected orientation of the thermostatic control device. Accordingly, the thermostatic control device is itself capable of determining how it is oriented, by means of the orientation sensor arranged inside the housing. Furthermore, a sensor output signal is generated, reflecting the detected orientation, thereby making the thermostatic control device capable of operating in accordance with the orientation of the thermostatic control device, based on the generated sensor output signal.

Finally, the thermostatic control device comprises control means arranged to receive a sensor output signal from the orientation sensor, and to generate one or more command signals based thereon. Accordingly, when generating the command signal(s) the orientation of the thermostatic control device is taken into account. This is obtained automatically, because the orientation sensor is arranged inside the housing, thereby forming part of the thermostatic control device, and because the orientation sensor communicates directly with the control means.

The control means is arranged to generate a command signal for the temperature sensor(s), in order to cause the temperature sensor(s) to perform temperature measurements along a predefined direction. Thereby at least one command signal generated by the control means is used for controlling the direction in which the temperature measurements are performed.

Sometimes a measured ambient temperature may depend on a direction in which the temperature is measured. For instance, in the case that the thermostatic control device is used for controlling a flow of heating fluid to a radiator, the radiator will most likely be arranged against a wall, and possibly below a window sill. In this case, temperatures measured in a direction towards the radiator, towards the wall or towards the window sill will most likely be higher than temperatures measured in a direction pointing away from these objects. It may therefore be important to select a direction of measurement which is in accordance with the objective of the performed temperature measurements.

The predefined direction may be a direction pointing towards a centre of a room in which the thermostatic control device is positioned. According to this embodiment, the measured temperature is representative for the temperature prevailing in the room in which the thermostatic control device is positioned to a greater extent, than would be the case if the temperature was measured in another direction, for instance towards a radiator, a wall or a window sill. Thereby the thermostatic control device can be operated accurately on the basis of a prevailing room temperature, e.g. in order to obtain a desired temperature in the room.

The thermostatic control device may comprise two or more temperature sensors, each temperature sensor being arranged to perform temperature measurements along a distinctive direction, and the control means may be arranged to generate a command signal for selecting an appropriate temperature sensor.

According to this embodiment, the generated command signal is used for selecting one of the temperature sensors, thereby ensuring that the temperature measurements are performed along a desired direction. The temperature sensors may, e.g., be arranged in different parts of the housing, thereby allowing them to perform temperature measurements along a direction determined by their respective positions, e.g. out of the housing through a wall part which the temperature sensor is arranged against.

As an alternative, the thermostatic control device may comprise at least one temperature sensor which is capable of directing temperature measurements in various directions. In this case temperature measurements along a specific direction can be obtained by causing this temperature sensor to direct its temperature measurements along the specific direction.

Alternatively or additionally, the thermostatic control device may comprise a first temperature sensor arranged to measure an ambient temperature in the vicinity of the thermostatic control device, and a second temperature sensor arranged to measure a temperature in the vicinity of the fluid in the conduit, and the control means may be arranged to generate a command signal, which causes temperature measurements of the first temperature sensor to be adjusted, based on the temperature measurements of the second temperature sensor, and on the basis of the sensor output signal of the orientation sensor.

When the ambient temperature is measured by a temperature sensor arranged inside the housing of the thermostatic control device, there is a risk that the measured temperature is affected by the temperature of the fluid flowing in the conduit, due to the proximity of the temperature sensor to the conduit. This is in particular the case when the fluid is a heating fluid. It may therefore be necessary to correct or adjust the measured ambient temperature to take this into account, and in order to obtain a temperature which, to a greater extent, is representative for the temperature prevailing in the room in which the thermostatic control device is positioned.

However, the orientation of the thermostatic control device may have an impact on the extent to which it is necessary to adjust or correct the measured temperature. For instance, as described above, in the case that the ambient temperature is measured along a direction pointing towards a radiator, a wall or a window sill, then the measured ambient temperature will be affected by the temperature of the fluid flowing in the conduit to a greater extent, than would be the case if the ambient temperature is measured along a direction pointing away from such objects, e.g. in a direction towards a centre of the room. By detecting the orientation of the thermostatic control device, the position of the temperature sensor performing the measurements of the ambient temperature relative to such objects is also established, and thereby it can be determined to which extent the measured ambient temperature needs to be corrected or adjusted.

It is therefore an advantage that the measured ambient temperature is adjusted on the basis of a measured temperature of the fluid in the conduit, as well as on the basis of the detected orientation of the thermostatic control device.

The thermostatic control device may further comprise a display mounted on or forming part of an outer wall of the housing, and the control means may be arranged to generate a command signal for the display, in order to align a reading direction of the display with respect to a measured orientation of the thermostatic control device.

According to this embodiment, the command signal(s) generated by the control means is/are used for ensuring that the reading direction of the display is selected in accordance with the orientation of the thermostatic control device. Thereby it can be ensured that, regardless of the orientation of the thermostatic control device, a user will be able to easily read the information presented on the display. Furthermore, this is obtained automatically, since the orientation sensor forms part of the thermostatic control device, and since the orientation communicates directly with the control means, which in turn controls the orientation of reading direction of the display.

The orientation sensor may be a tilt sensor, such as a four directional tilt sensor. According to this embodiment, the orientation sensor is capable of measuring when the thermostatic control device is tilted with respect to one or more axes.

Alternatively or additionally, the orientation sensor may comprise a movable ball. The movements of the ball will, in this case, indicate the orientation of the thermostatic control device. For instance, various orientations may cause the movable ball to come into contact with various stationary parts, such as walls or rods, inside the housing of the thermostatic control device. By detecting which of the stationary parts the ball is in contact with, an orientation of the thermostatic control device can be derived.

As an alternative, other kinds of orientation sensors may be used, such as chip based orientation sensors.

### BRIEF DESCRIPTION OF THE DRAWINGS

The invention will now be described in further detail with reference to the accompanying drawings, in which
Fig. 1 is a perspective view of a thermostatic control device according to a first embodiment of the invention,
Fig. 2 is a perspective view of a thermostatic control device according to a second embodiment of the invention,
Figs. 3-6 are perspective views of a radiator having the thermostatic control device of Fig. 2 mounted thereon in various orientations, and
Figs. 7-14 illustrate various orientations of a thermostatic control device according to an embodiment of the invention, and corresponding orientations of an orientation sensor arranged inside the thermostatic control device.

### DETAILED DESCRIPTION OF THE DRAWINGS

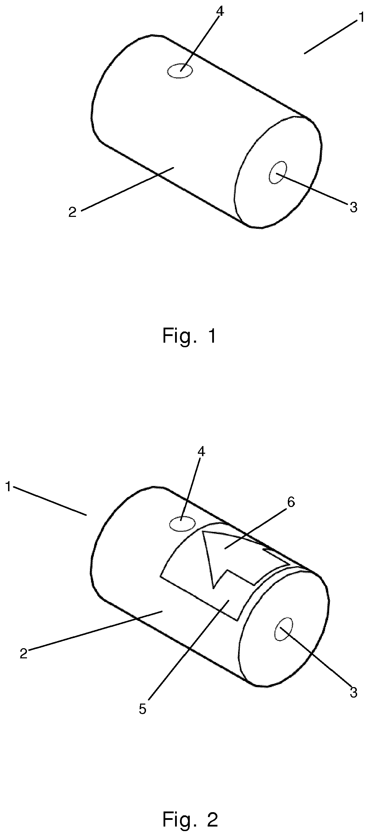

Fig. 1 is a perspective view of a thermostatic control device 1 according to a first embodiment of the invention. The thermostatic control device 1 is arranged to regulate a flow of fluid in a conduit (not shown), such as a flow of heating fluid. The thermostatic control device 1 comprises a housing 2 forming a boundary of the thermostatic control device 1 and defining an interior part thereof. A first temperature sensor 3 and a second temperature sensor 4 are arranged inside the housing 2.

The first temperature sensor 3 is arranged to measure an ambient temperature in the vicinity of an end part of the thermostatic control device 1. The second temperature sensor 4 is arranged to measure a temperature in the vicinity of the fluid in the conduit. Accordingly, the second temperature sensor 4 measures a temperature which is indicative for the temperature of the fluid flowing in the conduit. This temperature further gives an indication regarding to which extent the temperature measured by the first temperature sensor 3 is affected by the temperature of the fluid flowing in the conduit. Thereby the temperature measurements performed by the first temperature sensor 3 may be corrected or adjusted on the basis of the temperature measurements performed by the second temperature sensor 4, in order to obtain a temperature value which to a greater extent corresponds to a temperature prevailing in the room in which the thermostatic control device 1 is located.

The thermostatic control device 1 further comprises an orientation sensor (not shown) positioned inside the housing 2. Thereby the thermostatic control device 1 is capable of detecting its orientation. The orientation sensor is arranged to generate a sensor output signal reflecting the detected orientation of the thermostatic control device 1, and to communicate the sensor output signal to control means (not shown).

The control means is arranged to generate one or more command signals, based on the received sensor output signal. The command signal(s) may, e.g., be used as input to an algorithm for calculating a correction or an adjustment of the temperature measurements performed by the first temperature sensor 3 on the basis of the temperature measurements performed by the second temperature sensor 4. Thereby the performed correction or adjustment takes the orientation of the thermostatic control device 1 into account.

Fig. 2 is a perspective view of a thermostatic control device 1 according to a second embodiment of the invention. The thermostatic control device 1 of Fig. 2 is very similar to the thermostatic control device 1 of Fig. 1, and it will therefore not be described in further detail here.

The thermostatic control device 1 of Fig. 2 further comprises a display 5 forming part of an outer wall of the housing 2. Arrow 6 illustrates a reading direction of the display 5.

In the thermostatic control device 1 of Fig. 2 the command signal(s) generated by the control means, based on the sensor output signal from the orientation sensor, may be used for adjusting the reading direction 6 of the display 5 in such a manner that the reading direction 6 is aligned with respect to the orientation of the thermostatic control device 1. Thereby it can be ensured that an operator can easily read information presented on the display 5, regardless of the orientation of the thermostatic control device 1.

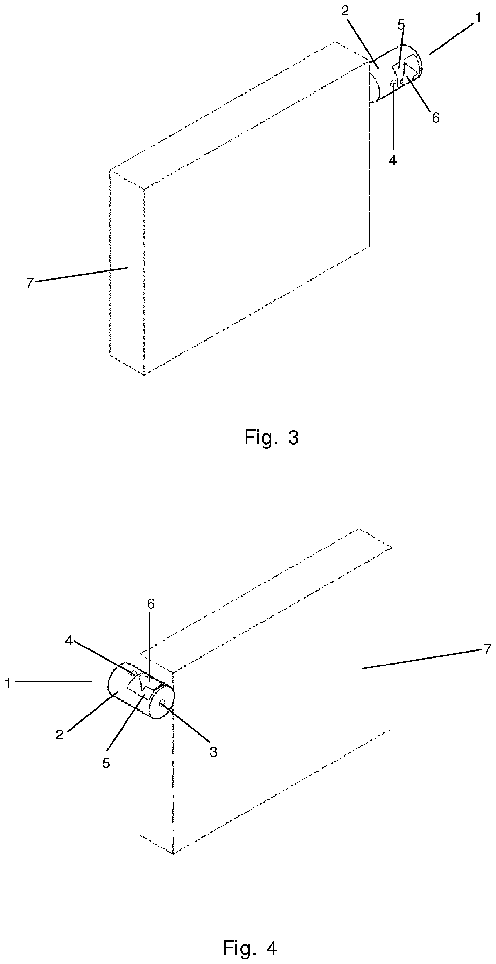

Fig. 3 is a perspective view of a radiator 7 having the thermostatic control device 1 of Fig. 2 mounted thereon, in such a manner that the thermostatic control device 1 regulates a flow of heating fluid to the radiator 7. The thermostatic control device 1 is mounted on the radiator 7 in a first orientation, where the first temperature sensor (not visible) points in a direction away from the radiator 7, but along a wall on which the radiator 7 is mounted.

The orientation sensor (not shown) arranged inside the housing 2 of the thermostatic control device 1 detects this orientation of the thermostatic control device 1, and generates a sensor output signal reflecting the detected orientation. The sensor output signal is supplied to a control means, and the control means generates command signals based on the received sensor output signal, i.e. based on the detected orientation of the thermostatic control device 1.

One command signal is supplied to the display 5 of the thermostatic control device 1, in order to ensure that the reading direction 6 of the display 5 is in accordance with the detected orientation of the thermostatic control device 1. This is illustrated by the arrow 6. Thereby it is ensured that any information presented on the display 5 can readily be read by a person approaching the radiator 7 and the thermostatic control device 1.

Another command signal is used as an input to an algorithm for calculating a correction to temperature measurements performed by the first temperature sensor, based on measurements performed by the second temperature sensor 4. Since the first temperature sensor is arranged as far away from the radiator 7 as possible, the temperature measurements performed by the first temperature sensor are only moderately affected by the temperature of the heating fluid being supplied to the radiator 7. On the other hand, since the first temperature sensor is arranged along the wall on which the radiator 7 is mounted, the temperature measured by the first temperature sensor must be expected to be higher than the temperature generally prevailing in the room in which the radiator 7 and the thermostatic control device 1 are positioned. Therefore, in order to obtain an appropriate estimate for the prevailing room temperature, some correction of the temperature measurements performed by the first temperature sensor are required. This is all taken into account by the algorithm, based on the received command signal, and thereby based on the detected orientation of the thermostatic control device 1.

Fig. 4 is a perspective view of a radiator 7 having the thermostatic control device 1 of Fig. 2 mounted thereon, in such a manner that the thermostatic control device 1 regulates a flow of heating fluid to the radiator 7. The thermostatic control device 1 is mounted on the radiator 7 in a second orientation, where the first temperature sensor 3 points in a direction away from the radiator 7 and away from the wall on which the radiator 7 is mounted.

In Fig. 4 the detected orientation of the thermostatic control device 1 results in a reading direction 6 of the display 5 which differs from the reading direction shown in Fig. 3, since it is now ensured that the reading direction 6 is in accordance with the orientation of the thermostatic control device 1 illustrated in Fig. 4.

As described above, in Fig. 4 the first temperature sensor 3 points in a direction away from the radiator 7 as well as away from the wall on which the radiator 7 is mounted. Accordingly, the temperature measurements performed by the first temperature sensor 7 are only affected by the temperature of the heating fluid to a minimal extent, and therefore only minor corrections of the temperature measurements performed by the first temperature sensor 3, based on the temperature measurements performed by the second temperature sensor 4, are required in this case. Similarly to the situation described above with reference to Fig. 3, this is all taken into account when calculating the correction by means of the algorithm.

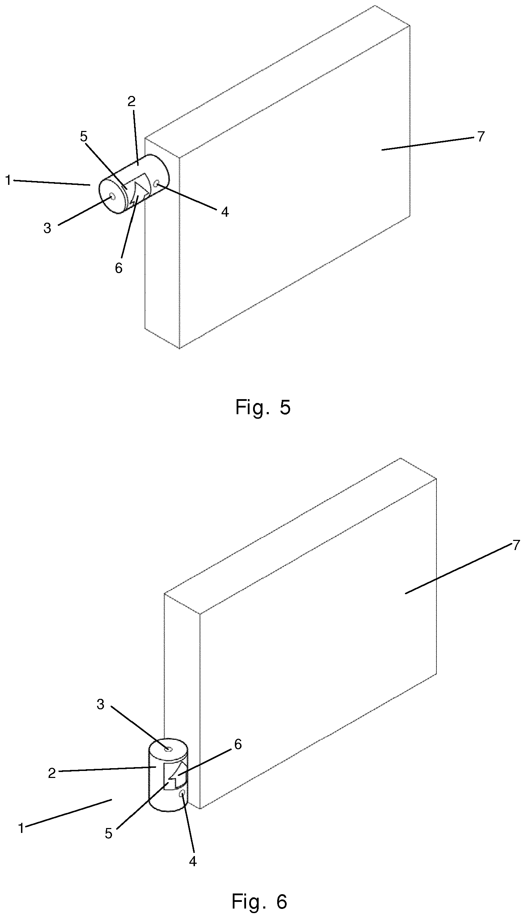

Fig. 5 is a perspective view of a radiator 7 having the thermostatic control device 1 of Fig. 2 mounted thereon, in such a manner that the thermostatic control device 1 regulates a flow of heating fluid to the radiator 7. The thermostatic control device 1 is mounted on the radiator 7 in a third orientation, where the first temperature sensor 3 points in a direction away from the radiator 7, and along a wall on which the radiator 7 is mounted, similarly to the situation illustrated in Fig. 3. Accordingly, the correction required to the temperature measurements performed by the first temperature sensor 3, based on the temperature measurements performed by the second temperature sensor 4 are identical to those required in the situation illustrated in Fig. 3.

However, the reading direction 6 of the display 5 is reversed as compared to the situation illustrated in Fig. 3, since the thermostatic control device 1 is mounted on the left side of the radiator 7 rather than on the right side.

Fig. 6 is a perspective view of a radiator 7 having the thermostatic control device 1 of Fig. 2 mounted thereon, in such a manner that the thermostatic control device 1 regulates a flow of heating fluid to the radiator 7. The thermostatic control device 1 is mounted on the radiator 7 in a fourth orientation, where the first temperature sensor 3 points in an upwards direction, along the radiator 7 and along the wall on which the radiator 7 is mounted.

Once again, the reading direction 6 of the display 5 is in accordance with this orientation of the thermostatic control device 1.

As described above, in the situation illustrated in Fig. 6, the first temperature sensor 3 is arranged close to the heating fluid being supplied to the radiator 7, as well as along the wall on which the radiator 7 is mounted. Therefore the temperature measurements being performed by the first temperature sensor 3 must be expected to be affected by the temperature of the heating fluid to a great extent. Therefore, in this case relatively large corrections of the temperature measurements performed by the first temperature sensor 3, based on the temperature measurements performed by the second temperature sensor 4 are required.

It should be noted that, in Figs. 3-6, other types of thermostatic control devices could be applied. For instance, a thermostatic control device having a number of temperature sensors, each pointing in a distinct direction, could be used. In this case, instead of performing corrections to the temperature measurements, based on the detected orientation of the thermostatic control device, the detected orientation could be used for selecting one of the temperature sensors, in such a manner that the ambient temperature is always measured by a temperature sensor pointing towards the centre of the room, thereby ensuring that the temperature measurements are as close to the prevailing room temperature as possible.

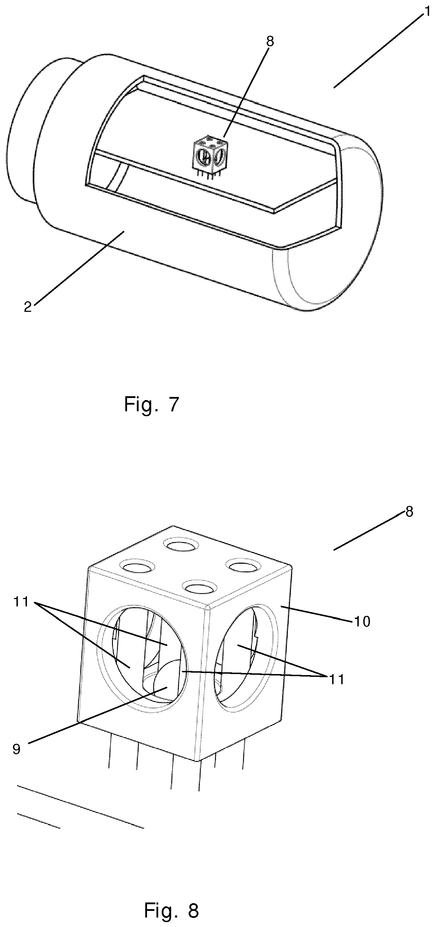

Figs. 7-14 illustrate various orientations of a thermostatic control device 1 according to an embodiment of the invention, and corresponding orientations of an orientation sensor 8 arranged inside the thermostatic control device 1.

Fig. 7 is a perspective view of a thermostatic control device 1 according to an embodiment of the invention. The thermostatic control device 1 could, e.g., be the thermostatic control device of Fig. 1 or the thermostatic control device of Fig. 2. A part of the housing 2 has been broken away in order to reveal the interior part of the housing 2.

An orientation sensor 8 is arranged inside the housing 2 of the thermostatic control device 1, thereby allowing the thermostatic control device 1 to detect its orientation.

Fig. 8 shows the orientation sensor 8, in the orientation illustrated in Fig. 7. The orientation sensor 8 comprises a movable ball 9 arranged inside a sensor housing 10. Four contact sensitive rods 11 are further arranged inside the sensor housing 10. It can be detected whether or not the movable ball 9 is in contact with each of the contact sensitive rods 11, or with an end surface of the sensor housing 10. Based on this information, the orientation of the orientation sensor 8, and thereby of the thermostatic control device 1, can be determined.

In Figs. 7 and 8, the movable ball 9 is not in contact with any of the contact sensitive rods 11, but is in contact with one of the end surfaces of the sensor housing 10, corresponding to the orientation of the thermostatic control device 1 shown in Fig. 7.

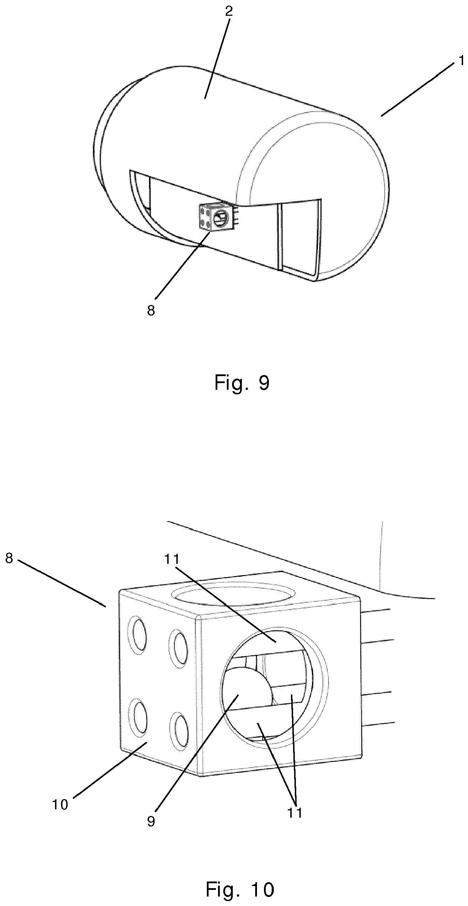

Fig. 9 shows the thermostatic control device 1 of Fig. 7 in a different orientation, and Fig. 10 shows the corresponding orientation of the orientation sensor 8. In this case the movable ball 9 is arranged in contact with two of the contact sensitive rods 11, and it can therefore be determined that the orientation of the thermostatic control device 1 is as illustrated in Fig. 9.

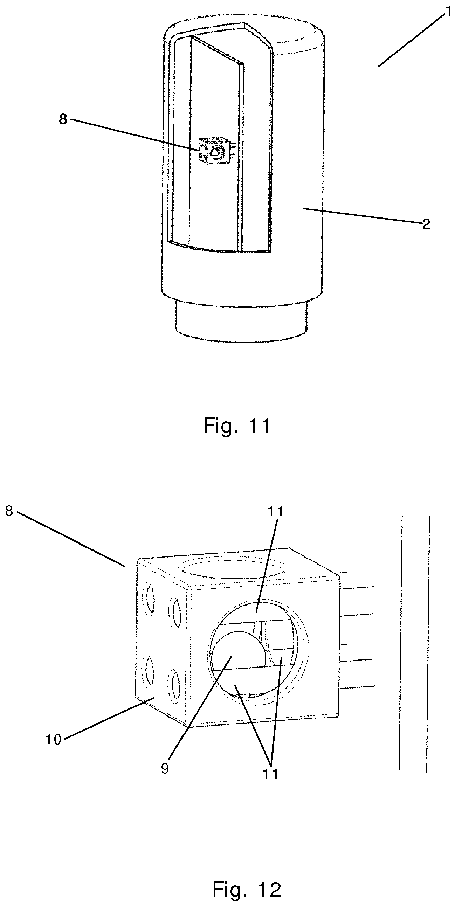

Fig. 11 shows the thermostatic control device 1 of Figs. 7 and 9 in yet another orientation, and Fig. 12 shows the corresponding orientation of the orientation sensor 8. In this case the movable ball 9 is also arranged in contact with two of the contact sensitive rods 11. However, it is not the same rods 11 as was the case in the situation illustrated in Figs. 9 and 10. Therefore, based on this information it can be determined that the orientation of the thermostatic control device 1 is as illustrated in Fig. 11.

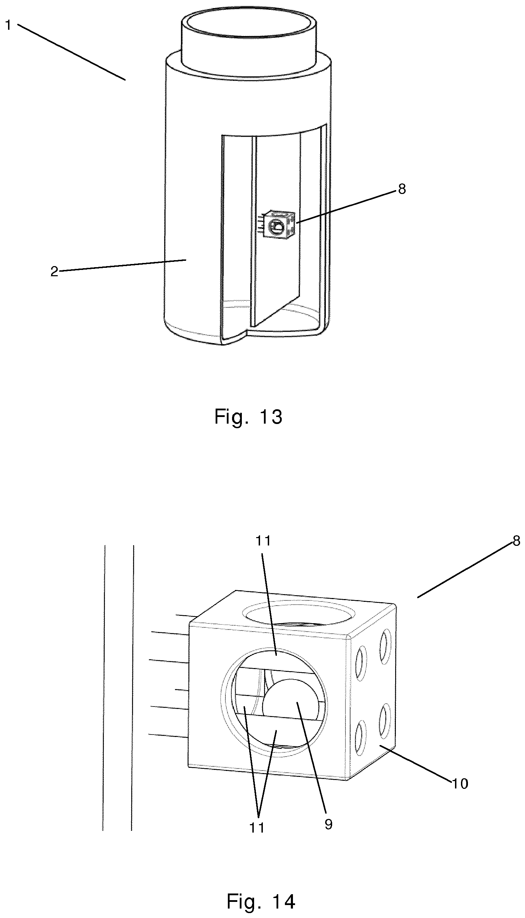

Fig. 13 shows the thermostatic control device 1 of Figs. 7, 9 and 11 in yet another orientation, and Fig. 14 shows the corresponding orientation of the orientation sensor 8. Once again, the movable ball 9 is arranged in contact with two of the contact sensitive rods 11. However, it is not the rods 11 as was the case in the situations illustrated in Figs. 9-12. Therefore, based on this information it can be determined that the orientation of the thermostatic control device 1 is as illustrated in Fig. 13.

## Claims

1. A thermostatic control device (1) for regulating a flow of fluid in a conduit, the thermostatic control device (1) comprising:
- a housing (2),
- at least one temperature sensor (3, 4) positioned inside the housing (2), and being arranged to measure an ambient temperature in the vicinity of the thermostatic control device (1),
- an orientation sensor (8) positioned inside the housing (2), said orientation sensor (8) being arranged to detect an orientation of the thermostatic control device (1) and to generate a sensor output signal reflecting a detected orientation of the thermostatic control device (1), **characterised in that** said thermostatic control device has
- control means arranged to receive a sensor output signal from the orientation sensor (8), and to generate one or more command signals based thereon, the control means being arranged to generate a command signal for the temperature sensor(s) (3, 4), in order to cause the temperature sensor(s) (3, 4) to perform temperature measurements along a predefined direction.

2. A thermostatic control device (1) according to claim 1, wherein the predefined direction is a direction pointing towards a centre of a room in which the thermostatic control device (1) is positioned.

3. A thermostatic control device (1) according to claim 1 or 2, wherein the thermostatic control device (1) comprises two or more temperature sensors (3, 4), each temperature sensor (3, 4) being arranged to perform temperature measurements along a distinctive direction, and wherein the control means is arranged to generate a command signal for selecting an appropriate temperature sensor (3, 4).

4. A thermostatic control device (1) according to any of the preceding claims, wherein the thermostatic control device (1) comprises a first temperature sensor (3) arranged to measure an ambient temperature in the vicinity of the thermostatic control device (1), and a second temperature sensor (4) arranged to measure a temperature in the vicinity of the fluid in the conduit, and wherein the control means is arranged to generate a command signal, which causes temperature measurements of the first temperature sensor (3) to be adjusted, based on the temperature measurements of the second temperature sensor (4), and on the basis of the sensor output signal of the orientation sensor (8).

5. A thermostatic control device (1) according to any of the preceding claims, wherein the orientation sensor (8) is a tilt sensor.

6. A thermostatic control device (1) according to claim 5, wherein the orientation sensor (8) is a four directional tilt sensor.

7. A thermostatic control device (1) according to claim 5 or 6, wherein the orientation sensor (8) comprises a movable ball (9).

## Patentansprüche

1. Thermostatregelvorrichtung (1) zum Regeln eines Medienflusses in einer Leitung, wobei die Thermostatregelvorrichtung (1) umfasst:
- ein Gehäuse (2),
- mindestens einen Temperatursensor (3, 4), der in dem Gehäuse (2) angebracht ist und der geeignet ist, eine Umgebungstemperatur in der Nähe der Thermostatregelvorrichtung (1) zu messen,
- einen Ausrichtungssensor (8), der in dem Gehäuse (2) angebracht ist, wobei der Ausrichtungssensor (8) geeignet ist, um eine Ausrichtung der Thermostatregelvorrichtung (1) zu erkennen und um ein Sensorausgabesignal zu erzeugen, das eine erkannte Ausrichtung der Thermostatregelvorrichtung (1) wiedergibt, **dadurch gekennzeichnet, dass** die Thermostatregelvorrichtung aufweist:
- ein Steuerelement, das geeignet ist, um ein Sensorausgabesignal von dem Ausrichtungssensor (8) zu empfangen und um auf dessen Grundlage ein oder mehrere Befehlssignale zu erzeugen, wobei das Steuerelement geeignet ist, um ein Befehlssignal für den (die) Temperatursensor(en) (3, 4) zu erzeugen, um den (die) Temperatursensor(en) (3, 4) zu veranlassen, Temperaturmessungen entlang einer vordefinierten Richtung auszuführen.

2. Thermostatregelvorrichtung (1) nach Anspruch 1, wobei die vordefinierte Richtung eine Richtung ist, die in Richtung auf eine Mitte eines Raumes zeigt, in dem die Thermostatregelvorrichtung (1) angebracht ist.

3. Thermostatregelvorrichtung (1) nach Anspruch 1 oder 2, wobei die Thermostatregelvorrichtung (1) zwei oder mehr Temperatursensoren (3, 4) umfasst, wobei jeder Temperatursensor (3, 4) geeignet ist, Temperaturmessungen entlang einer unterschiedlichen Richtung auszuführen, und wobei das Steuerelement geeignet ist, um ein Befehlssignal zum Auswählen eines geeigneten Temperatursensors (3, 4) zu erzeugen.

4. Thermostatregelvorrichtung (1) nach einem der vorhergehenden Ansprüche, wobei die Thermostatregelvorrichtung (1) einen ersten Temperatursensor (3), der geeignet ist, um eine Umgebungstemperatur in der Nähe der Thermostatregelvorrichtung (1) zu messen, und einen zweiten Temperatursensor (4) umfasst, der geeignet ist, um eine Temperatur in der Nähe des Mediums in der Leitung zu messen, und wobei das Steuerelement geeignet ist, um ein Befehlssignal zu erzeugen, das veranlasst, dass die Temperaturmessungen des ersten Temperatursensors (3) aufgrund der Temperaturmessungen des zweiten Temperatursensors (4) und aufgrund des Signalausgabesignals des Ausrichtungssensors (8) angepasst werden.

5. Thermostatregelvorrichtung (1) nach einem der vorhergehenden Ansprüche, wobei der Ausrichtungssensor (8) ein Neigungssensor ist.

6. Thermostatregelvorrichtung (1) nach Anspruch 5, wobei der Ausrichtungssensor (8) ein Richtungsneigungssensor ist.

7. Thermostatregelvorrichtung (1) nach Anspruch 5 oder 6, wobei der Ausrichtungssensor (8) eine bewegbare Kugel (9) umfasst.

## Revendications

1. Dispositif de régulation thermostatique (1) pour réguler un écoulement de fluide dans une canalisation, le dispositif de régulation thermostatique (1) comprenant :
- un boîtier (2),
- au moins un capteur de température (3, 4) positionné à l'intérieur du boîtier (2) et étant conçu pour mesurer une température ambiante à proximité du dispositif de régulation thermostatique (1),
- un capteur d'orientation (8) positionné à l'intérieur du boîtier (2), ledit capteur d'orientation (8) étant conçu pour détecter une orientation du dispositif de régulation thermostatique (1) et pour générer un signal de sortie de capteur reflétant une orientation détectée du dispositif de régulation thermostatique (1), **caractérisé en ce que** ledit dispositif de régulation thermostatique comporte
- un moyen de commande conçu pour recevoir un signal de sortie de capteur en provenance du capteur d'orientation (8) et pour générer un ou plusieurs signaux de commande sur la base de ce dernier, le moyen de commande étant conçu pour générer un signal de commande pour le ou les capteurs de température (3, 4) afin de contraindre le ou les capteurs de température (3, 4) à effectuer des mesures de température dans une direction prédéfinie.

2. Dispositif de régulation thermostatique (1) selon la revendication 1, dans lequel la direction prédéfinie est une direction pointant vers le centre d'une pièce dans laquelle le dispositif de régulation thermostatique (1) est positionné.

3. Dispositif de régulation thermostatique (1) selon la revendication 1 ou 2, dans lequel le dispositif de régulation thermostatique (1) comprend au moins deux capteurs de température (3, 4), chaque capteur de température (3, 4) étant conçu pour effectuer des mesures de température dans une direction distinctive, et dans lequel le moyen de commande est conçu pour générer un signal de commande pour sélectionner un capteur de température approprié (3, 4).

4. Dispositif de régulation thermostatique (1) selon l'une quelconque des revendications précédentes, dans lequel le dispositif de régulation thermostatique (1) comprend un premier capteur de température (3) conçu pour mesurer une température ambiante à proximité du dispositif de régulation thermostatique (1), et un second capteur de température (4) conçu pour mesurer une température à proximité du fluide dans la canalisation, et dans lequel le moyen de commande est conçu pour générer un signal de commande, qui provoque le réglage de mesures de température du premier capteur de température (3), en se basant sur les mesures de température du second capteur de température (4) et sur la base du signal de sortie de capteur du capteur d'orientation (8).

5. Dispositif de régulation thermostatique (1) selon l'une quelconque des revendications précédentes, dans lequel le capteur d'orientation (8) est un capteur d'inclinaison.

6. Dispositif de régulation thermostatique (1) selon la revendication 5, dans lequel le capteur d'orientation (8) est un capteur d'inclinaison dans quatre directions.

7. Dispositif de régulation thermostatique (1) selon la revendication 5 ou 6, dans lequel le capteur d'orientation (8) comprend une bille mobile (9).
